# EUROPEAN PATENT SPECIFICATION

(11) **EP 2 653 355 B1**
(45) Date of publication and mention of the grant of the patent: **10.06.2015**
(21) Application number: 12305451.2
(22) Date of filing: 18.04.2012
(51) Int. Cl.: G06F 3/023

(54) **Keypad assembly and method to access a car**
Tastenfeldanordnung und Verfahren für den Zugang zu einem Auto
Ensemble clavier et procédé pour accéder à une voiture

(43) Date of publication of application: 23.10.2013
(73) Proprietor: Eileo, 75003 Paris (FR)
(72) Inventor: Lemoult, Thierry, 77500 Chelles (FR); Remond, Guillaume, 75015 Paris (FR); Morel, Juan-Luis, 92290 Chatenay-Malabry (FR)
(74) Representative: Pontet Allano & Associes

(56) References cited:
- EP-A1- 1 160 400
- EP-A2- 0 950 784
- WO-A2-2007/084096
- KR-A- 20030 048 511
- US-A1- 2010 102 832

## Description

The present invention relates to a keypad assembly and to a method to access a car, and more particularly to the automated car rental.

To simplify the way of renting a car, rental companies are largely implementing reservation systems via Internet or telephone. This is an automated rental where the user can directly access the reserved vehicle without possessing the key. To do this, one can use an RFID reader through the windscreen. This method is very suitable in the case of a regular user who was given an RFID card upon registration.

However this method is not possible in the case of an occasional user. Generally, the user does not have an RFID card. However, when booking, he was able to get a secret code (number and/or letters) in various ways: by a printed ticket terminal, SMS, email, etc.

The document US2010/0277320 A1 "RFID KEYPAD ASSEMBLIES" describes an RFID card integrating a keyboard used before an RFID card reader. Keys are depressible by a person's finger, each key being associated with a RFID transmitter and capable of enabling the transmitter to transmit a signal that may be read by the RFID reader.

However, in the car rental domain, such a system requires installation of the RFID card on the outer surface of the windscreen. The RFID card can collide with the wipers blades. Also the longevity of the card is limited due to external aggressions: rain, snow, pollution etc.

The document WO 2008/038899 A1 "RFID TERMINAL HAVING A PERSONAL AUTHENTICATION DEVICE" describes a portable device combining a keyboard and an RFID reader.

However, the disclosed device includes mechanical keys that require outdoor installation under climatic constraints, and therefore not sustainable in the long term. Moreover, the fragmented form of the terminal with a rear end, makes it difficult to install on a flat surface of a vehicle.

Capacitive keyboards exist and operate through glass. Such a keyboard is used for appliances or computer keyboards in the medical community due to hygiene issues. However this type of capacitive keyboard is not usable with athermal windscreens containing metal film which acts as an electrostatic shield. It makes the capacitive effect overall. With this type of windscreen, a capacitive keyboard can detect the approach of a finger without being able to determine the activated key.

In automotive systems, keyboards to access the vehicle are available on some vehicles as original equipment. This keyboard is located on the door near the handle. Installation is performed using an opening in the bodywork revealing the keyboard. Such an installation requires an opening in the door.

Document EP 0 950 784 A2 discloses a remote-control tranmistter comprising a keypad for entering an authorization code and causing the transmitter to output a wireless signal for door unlocking in case the code is correct.

Document KR 2003 0048511 A describes a device for controlling a door lock by using a keypad relying on infrared LEDs.

Document WO 2007/084096 A2 discloses an anti-hijacker system for a vehicle comprising an RFID tag and an RFID receiver allowing an authorized user to operate the vehicle.

Document US 2010/102832 A1 describes an electronic device comprising a capacitive touch scan coupled to a capacitive touch keypad. The capacitance value of the capacitive keys is determined by the capacitive touch scan while the electronic device is in a sleep mode and, if any one of the key is actuated, the electronic device switches to the normal mode.

The present invention aims to propose a new car access system for which the installation is completely reversible and not harmful to the car.

The present invention also aims to propose a new system that works with all types of windscreen including athermal screen with a thin metal layer blocking radio waves.

Another object of the invention is to provide a new system which is energy efficient.

The present invention is an optical keypad assembly to access a car, comprising:
- a plurality of keys, each key comprising at least an emitter for emitting visible light and an associated receiver for receiving reflected visible light,
- a processing unit for controlling emitters and receivers and for determining if a key has been selected by analysing signal generated by the receiver of said key; keys successively selected constituting an identification code entered by a user to access the car.

The visible spectrum is the portion of the electromagnetic spectrum that is visible to the human eye. Electromagnetic radiation in this range of wavelengths from about 400 to 800 nm is called visible light. In the meaning of the present invention, infrared waves are not included in this range. As visible light is used, the optical keypad according to the invention works with all types of windscreen including:
- athermal windscreen that has a thin metal layer blocking radio waves, near infrared and UV radiation, and
- all types of windscreen which contains a metal foil, such as heating windscreens.

In other words, the keyboard measures the reflection of visible light through any type of windscreen and on the finger of the user. Visible light is emitted by LEDs (Light Emitting Diodes) and received by phototransistors or photodiodes.

The keypad according to the invention is contactless and is able to detect an identification code entered by an user for demobilizing a rental car : by opening the door, by rendering the engine available...

The optical keypad according to the invention proposes a new access system for which the installation is fully reversible and not harmful to the vehicle. Indeed it does not need to cross the bodywork or any joint as it runs through the windscreen. In fact, for a car rental company, the resale value of the vehicle decreases due to any damage to the vehicle.

Preferably, the visible light emitted by the emitter is amplitude modulated to distinguish the useful signal from ambient light. A coherent demodulation may be applied to determine an envelope signal generated by the receiver, this envelope being the useful signal.

In particular, the invention also proposes a method for use the optical keypad assembly by:
- successively activating an emitter and an associated receiver during a predetermined period of time for emitting a visible light and detecting the reflected visible light, and
- comparing the signal from the receiver with a value.

According to an embodiment of the invention, the comparing step may consist in comparing the value of the detected light intensity when the emitter is active and the value of the detected light intensity when the emitter is turned off. A simple implementation is to measure the light intensity value when LED turned on then subtracting to this value the intensity measured with the LED off. This method is equivalent to a coherent demodulation of amplitude according to the prior art.

Advantageously, the value of the detected light intensity when the emitter is turned off is obtained by determining the average of several values of detected light intensity when the emitter is turned off.

In a preferred embodiment, an analog-to-digital converter (ADC) of a microcontroller in the processing unit is used for detecting by current mode the signals generated by the receiver. A current mode measurement provides better linearity to the receiver.

According to an advantageously embodiment of the present invention, in order to optimize power consumption and a better signal to noise ratio, the supply current of emitters and receivers may be automatic controlled by the ambient light which is measured by the average luminous flux received by the receivers. In very bright atmosphere, the LED current is maximum, it is minimum in dark atmosphere. An embodiment of the LEDs power supply can be a PWM (Pulse Width Modulation) output of a microcontroller which is filtered to keep its continue component, this latter is amplified and modulated to power the LEDs.

The assembly further comprises a capacitive sensor for detecting the presence of nearby body without any physical contact, the processing unit being configured to switch from a sleep state to an active state in response to a signal coming from the capacitive sensor. Such a capacitive proximity sensor is used to minimize power consumption. It may be an electrode covering the surface of the keypad. Preferably, the capacitive sensor is distributed in the assembly.

The assembly further comprises a RFID antenna to communicate with an external RFID tag. Thus, the user may use an identification code or a RFID tag if possible.

The RFID antenna has a circular shape around (without overlapping) components used for managing the visible light; and wherein the capacitive sensor has a star shape in order to limit electromagnetic coupling with the RFID antenna, the capacitive sensor overlapping components used for managing the visible light. The components used for managing the visible light comprise the emitters and the receivers and others electronic components included in the assembly.

The decoupling of the RFID antenna and the capacitive sensor permits to minimize power consumption and not to degrade the sensitivity of the RFID antenna. Indeed the capacitive sensor is preferably a metal part which is traversed by induced currents. With the capacitive sensor in a star shape centered in the middle of the circular RFID antenna, metal parts of capacitive sensor are perpendicular to the conductors of the RFID antenna. This geometry minimizes the induced currents flowing parallel to induce currents.

Moreover, for conductors which are not parallel to the RFID antenna, the negative effect on the RFID antenna is reduced by inserting inductances into the wiring of emitter and receiver circuits, for example 470nH typical value for an antenna operating at 13.56 MHz.

According to another example the RFID antenna may be placed next to the keypad to avoid interference with the electronics of the keypad.

According to the invention, the assembly comprises a temperature sensor for compensating for thermal drift of the emitters and receivers.

In order to indicate the state of the keypad during a processing, the assembly further comprises signaling diodes.

The assembly may further comprise adhesive means for pressing the assembly behind the windscreen without gap. When the assembly is made from a flexible board, it can easily and properly match any shape of the windscreen.

For the purpose of illustrating the invention, there is shown in the drawings a form that is presently preferred; it being understood, however, that this invention is not limited to the precise arrangements and instrumentalities.
FIG. 1 is a schematic view illustrating a keypad assembly connected to a telematic box for opening the car when the identification code entered by a user is correct, according to the present invention;
FIG. 2 is a schematic view illustrating a keypad assembly pressed under a windscreen of a rental car, the telematic box being integrated in the car and connected to the board computer of the car, according to the invention;
FIG. 3 is a schematic view illustrating one key of the keypad assembly, said key comprises one emitter and one receiver pressed against the windscreen, without a gap between the windscreen and the emitter/receiver, according to the invention;
FIG. 4 is a schematic block diagram of the electronic components according to the invention;
FIG. 5 is a simplified view of a capacitive antenna together with a RFID antenna;
FIG. 6 is a schematic view illustrating electronic processing of signal used to excite the emitter and signal detected by the receiver.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

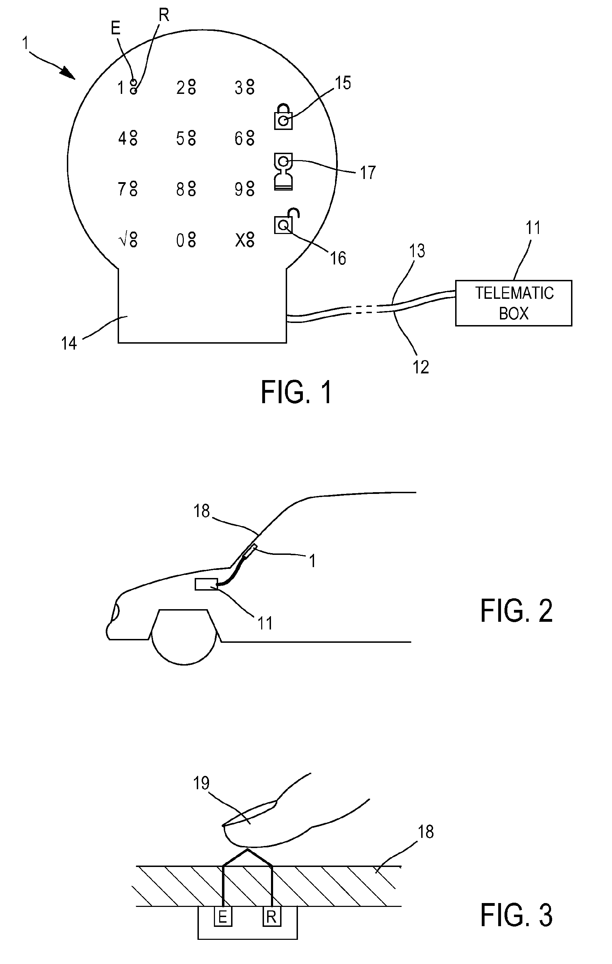

In accordance with the preferred embodiment, the device according to the invention is globally referenced by 1 on figure 1.

The keypad assemble 1 is made with a flexible board with thin electronic components such that it has a thickness of only a few millimeters. Figure 1 illustrates the outer face of the keypad assembly, the face intended to be pressed under the windscreen, inside the car. This outer face is thus visible from a user outside the car. Figures : 1, 2, 3, 4, 5, 6, 7, *8*, 9 and 0 are inscribed on the outer face which may be designed from plastic material or other. A check mark "√" and a sign of correction "X" are also listed on the outer face. Next to each figures and signs are two apertures. The first aperture receives an emitter E. The second aperture receives a receiver R.

The use of the keypad assembly may be as follows. A user who wishes to reserve a car connects to the Internet to make his reservation. Following booking process, he obtains an identification code on the Internet or by SMS for example. With its identification code, he arrives to a rental location to take possession of the reserved car. The user shall use the identification code to activate the opening of doors and unlock the system to start the car.

On Figure 1, a telematic box 11 is illustrated for communication with an onboard computer to control the car door opening and unlocking system to start the car. To do this, the telematic box 11 must check whether the user has the correct identification code predefined in the telematic box 11. The keypad assembly is used by the user to enter his identification code which is then transmitted to the telematic box 11. As discussed below, the keypad assembly includes a processing unit capable of detecting the figures entered by the user and to communicate them to the telematic box 11 via a data bus 12. The lower part 14 of the keypad assembly 1 is adapted to receive a battery. The communication between the keypad assembly and the telematic box may be a wireless communication. In another embodiment, the power supply may come from the telematic box 11. Figure 2 illustrates a front part of car. The keypad assembly 1 according to the present invention is disposed under the windscreen 18. The telematic box may be arranged in a hard to reach area of the car.

According to the invention, it is provided inside the keypad assembly a RFID antenna (not shown on figure 1) to communicate with a RFID tag if the user has such a tag. Preferably, electronic components intended to control the RFID antenna are disposed inside the telematic box to avoid being exposed to high temperatures under the windscreen. The connection between the RFID antenna inside the keypad assembly and the telematic box 11 consists in a coaxial cable 13.

Signaling LEDs are arranged on the outer face to indicate:
- if the car is locked (no correct identification code entered), the LED 15 corresponding to the image of a closed key lights up;
- if the identification code is correct, the car opens, the LED 16 corresponding to the image of a opened key lights up;
- if the processing unit or the telematic box 11 is processing, the LED 17 corresponding to the image of a timer lights up.

Figure 3 shows how a visible light travels from the emitter to the receiver through the glass thickness of the windscreen 18. When the emitter E is activated, a visible light is generated from the emitter E to outside. If there is an obstacle as a finger 19, the light is reflected to the keypad assembly. Some radiation return to the keypad assembly, to the receiver R associated to the emitter E. The emitter E and the receiver R are associated together because they constitute one key.

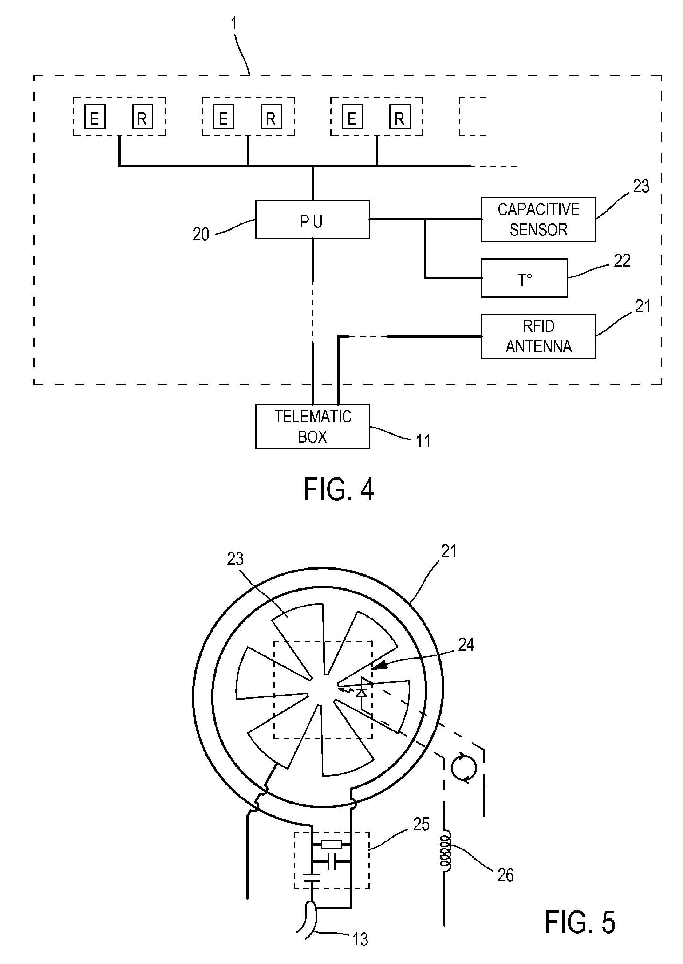

Referring now to figure 4, a bloc diagram according to the invention is shown.

The keypad assembly 1 includes a series of couples emitters-receivers that are managed by a processing unit 20. The RFID antenna 21 is connected to the telematic box 11.

The temperature sensor 22 detects the room temperature, which is transmitted to the processing unit. This latter uses the room temperature to perform a software correction of the temperature drift of the emitters and the receivers, their transfer function depending on the temperature.

The capacitive sensor 23 is used to limit the power consumption of the keypad assembly. This is a proximity sensor which detects the approach of the user finger. In the absence of finger, the processing unit is in standby (sleep) mode for which no signal is sent to the emitter. For example, during the standby mode, the emitters and receivers may not be activated. In case of approach of a finger or a fortiori of contact, the processing unit activates the emitters and receivers to achieve the detection of keys entered by the user. In particular, the processing unit successively fed all emitters with an excitation signal. The processing unit provides a processing window for each key, that is to say, an emitter-receiver pair. During this window, one begins by measuring the intensity of the light received by the receiver so as to obtain the intensity level of ambient light when the emitter is off. Then the emitter is fed to measure the light intensity level detected by the receiver.

The intensity level obtained emitter switched off is compared with an average of light intensity levels obtained emitter off. This avoids systematic calibration operations that would be due to the difference in thickness between windscreens. With this principle of subtraction of time-averaged, only rapid changes are retained, changes associated to the presence of the user's finger in front of the keys. The useful signal thus obtained after subtraction is then compared to a predetermined threshold to validate or not if a key has been selected.

Figure 5 illustrates an advantageous embodiment of the invention. The RFID antenna 21 is constituted by a conductive element forming one or more circular loops. The RFID antenna is produced on an electronic board which comprises all electronic components. An RLC circuit 25 is arranged on a branch of the RFID antenna so as to provide impedance matching with the coaxial cable 13 for example. The RLC circuit 25 is arranged on a branch of the RFID antenna so as to provide impedance matching with the coaxial cable 13 for example. The circuit 25 is a quadritail circuit comprising for example a resistance and two capacitances.

Inside the circle formed by the RFID antenna 21, the capacitive sensor 23 is disposed without overlapping the RFID antenna. The capacitive sensor is made with metallic material and has a star shape centered in the middle of the RFID antenna. The branches of the capacitive sensor are almost perpendicular to the conductive element of the RFID antenna. This geometry minimizes the induced currents that flow preferentially parallel to the inductor currents. The lines of inducing currents in the RFID antenna flow perpendicular to branches of the capacitive sensor. Due to minimized induced currents, the electromagnetic coupling between the capacitive sensor and the RFID antenna is limited in order to maintain the sensitivity of the latter.

In the center of the circle formed by the RFID antenna 21, is also arranged a set of electronic components 24 such as visible light emitters and receivers and possibly the processing unit and other electronic components known in prior art. This set of electronic components 24 may include conductive elements that disrupt the RFID antenna because these conductive elements produce an electromagnetic coupling. To avoid this, an inductor named inductor plug 26 is inserted mainly on conducting elements used for managing the emitters and receivers. For example, in FIG 5, an inductor is inserted in a loop formed by a branch of the electronic circuit to neutralize the induced current. For example, the loop may be the one that powers a LED keypad. The inductor can also be placed in the RFID antenna or adjacent to, but always in the electronic circuit. Typically, the value of the inductor is 470nH for an antenna operating at 13.56 MHz.

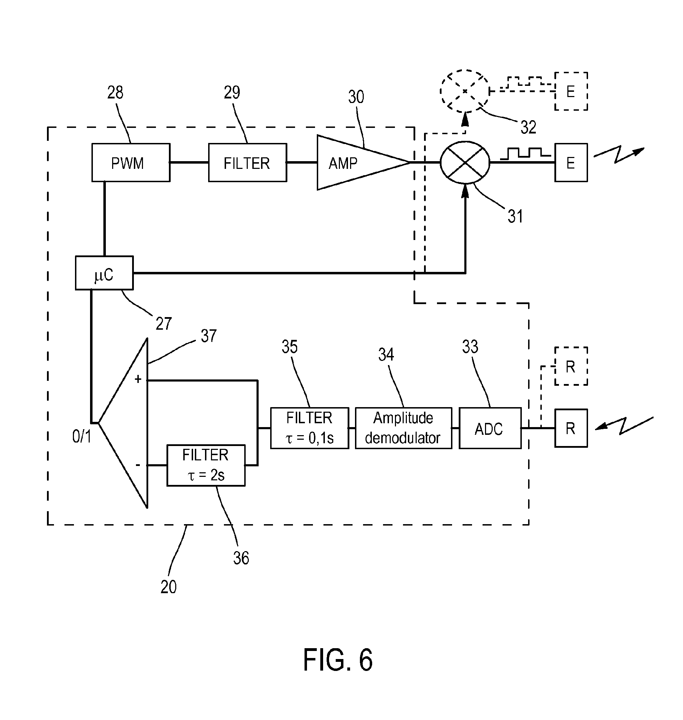

Figure 6 illustrates in more detail some of the electronic architecture of the keyboard according to the invention. The processing unit 20 includes a microcontroller 27 to control emitters and receivers. For the emission, a pulse width modulator PWM 28 is used for generating a low-power squared signal which is then filtered by the low-pass filter 29. The amplifier 30 amplifies the signal to a level enough to sequentially supply the emitters one after the other. The microcontroller is configured for routing the squared signal on a plurality of transmitters by means of a set of multipliers 31, 32.

On reception, the analog signal from the receiver R is converted into a digital signal by means of an analog-to-digital converter 33. The amplitude demodulator 34 performs a coherent demodulation and subtract from the useful signal a signal obtained by averaging several measured signals when the emitter is off. Then, a first filtering 35 is carried out to remove any electronic disturbance. Then a comparator 37 is fed with, on the one hand the signal from the first filter 35, and on the other hand a signal from a second low-pass filter 36 which is fed by the signal from the first filter 35. The second filter 36 is of first order with a delay of two seconds. The output of comparator 37 is a 0/1 signal that is collected by the microcontroller 27.

The present invention provides a system for vehicle access. Advantageously, it comprises an optical keypad and an RFID antenna working through a windscreen which can be athermal including a thin metal layer. The keypad measures the reflection of visible light on the fingers of the user. The keypad assembly has very low power consumption as it comprises a capacitive sensor for a standby mode. The capacitive sensor shape limits the induction with the RFID antenna.

The present invention therefore proposes a new access system for which the installation is fully reversible and not harmful to the vehicle. Indeed it does not need to cross the car body or any joint.

Numerous variations and modifications will become apparent to those skilled in the art once the above disclosure is fully appreciated. It is intended that the following claims be interpreted to embrace all such variations and modifications.

## Claims

1. An optical keypad assembly to access a car, comprising:
- a plurality of keys (E,R), each key comprising at least an emitter (E) for emitting visible light and an associated receiver (R) for receiving visible light emitted by the emitter and reflected on the finger of a user,
- a processing unit (20) for controlling emitters and receivers and for determining if a key has been selected by analysing a signal generated by the receiver of said key; keys successively selected constituting an identification code entered by a user to access the car,
the optical keypad assembly being **characterised in that** it comprises:
- a capacitive sensor (23) distributed in the assembly for detecting the presence of a nearby user's finger without any physical contact, the processing unit being configured to switch from a sleep state to an active state in response to a signal coming from the capacitive sensor,
- an RFID antenna (21) to communicate with an external RFID tag of a user, the RFID antenna (21) having a circular shape around components used for managing the visible light; and the capacitive sensor (23) being made with metallic material and having a star shape centered in the middle of the circular RFID antenna, the branches of the capacitive sensor being almost perpendicular to the conductive elements of the RFID antenna, in order to limit electromagnetic coupling with the RFID antenna, the capacitive sensor (23) overlapping components used for managing the visible light.

2. Assembly according to claim 1, wherein the visible light emitted by the emitter is amplitude modulated, and the assembly further comprises a coherent demodulator (34) to determine an envelope signal generated by the receiver.

3. Assembly according to claim 1 or 2, wherein it further comprises a temperature sensor (22) for compensating for thermal drift of the emitters and receivers.

4. Assembly according to any of preceding claims, wherein inductances (26) are inserted into the wiring of emitter and receiver circuits for reducing the negative effect of conductors on the RFID antenna (21).

5. Assembly according to any of preceding claims, wherein it further comprises adhesive means for pressing the assembly behind a windscreen (18) without gap, the assembly being made from a flexible board.

## Patentansprüche

1. Optische Tastaturbaugruppe zum Zugriff auf ein Fahrzeug, umfassend:
- eine Vielzahl von Tasten (E, R), wobei jede Taste wenigstens einen Sender (E) zum Aussenden sichtbaren Lichts und einen dazugehörigen Empfänger (R) zum Empfangen des sichtbaren Lichts aufweist, das vom Sender ausgestrahlt und vom Finger eines Benutzers reflektiert wird,
- einen Prozessor (20) zum Steuern der Sender und Empfänger und zum Feststellen, ob eine Taste gewählt wurde durch Analysieren eines Signals, das vom Empfänger dieser Taste generiert wurde; wobei nacheinander gewählte Tasten eine Kennung ergeben, die vom Benutzer eingegeben wurde, um Zugriff auf das Fahrzeug zu erhalten,
wobei die optische Tastaturbaugruppe **dadurch gekennzeichnet ist, dass** sie folgendes umfasst:
- einen kapazitiven Näherungssensor (23), der in der Baugruppe angeordnet ist, um die Nähe des Fingers eines Benutzers ohne jeden physischen Kontakt zu detektieren, wobei der Prozessor so ausgestaltet ist, dass er vom Ruhemodus zum aktiven Modus umschaltet als Reaktion auf ein Signal von dem kapazitiven Näherungssensor,
- eine RFID-Antenne (21) zum Kommunizieren mit einer externen RFID-Marke eines Benutzers, wobei die RFID-Antenne (21) kreisförmig Komponenten umgibt, die zur Nutzung des sichtbaren Lichts verwendet werden; und wobei der kapazitive Näherungssensor (23) mit metallischem Werkstoff hergestellt ist und sternförmig in der Mitte der kreisförmigen RFID-Antenne zentriert ist, wobei die Zweige des kapazitiven Näherungssensors annähernd senkrecht zu den leitenden Elementen der RFID-Antenne sind, um eine elektromagnetische Kopplung mit der RFID-Antenne zu begrenzen, wobei die überlappenden Komponenten des kapazitiven Näherungssensors (23) zur Nutzung des sichtbaren Lichts verwendet werden.

2. Baugruppe gemäß Anspruch 1, wobei das vom Sender ausgestrahlte sichtbare Licht amplitudenmoduliert ist und die Baugruppe ferner einen kohärenten Demodulator (34) umfasst, um ein durch den Empfänger generiertes Hüllsignal zu ermitteln.

3. Baugruppe gemäß Anspruch 1 oder 2, wobei sie ferner einen Temperatur-Näherungssensor (22) aufweist, um thermisches Driften der Sender und Empfänger zu kompensieren.

4. Baugruppe gemäß einem der vorhergehenden Ansprüche, wobei Induktionskräfte (26) in die Verdrahtung der Sender- und Empfängerschaltkreise eingeleitet werden, um die negativen Auswirkungen von Stromleitern auf die RFID-Antenne (21) zu reduzieren.

5. Baugruppe gemäß einem der vorhergehenden Ansprüche, wobei sie ferner Haftmittel aufweist, um die Baugruppe abstandslos an die Rückseite einer Windschutzscheibe (18) anzudrücken, wobei die Baugruppe aus einer biegsamen Platte besteht.

## Revendications

1. Installation de clavier optique permettant l'accès à un véhicule, comprenant :
▪ un ensemble de touches (E, R), chaque touche comprenant au moins un émetteur (E) pour émettre de la lumière visible et un récepteur associé (R) pour recevoir la lumière visible émise par l'émetteur et réfléchie par le doigt d'un utilisateur,
▪ une unité de traitement (20) pour commander les émetteurs et les récepteurs et pour déterminer si une touche a été sélectionnée par analyse d'un signal généré par le récepteur de ladite touche ; les touches sélectionnées successivement formant un code d'identification saisi par un utilisateur pour accéder au véhicule,
l'installation de clavier optique étant **caractérisée en ce qu'**elle comprend :
▪ un capteur capacitif (23) réparti dans l'installation afin de détecter la présence d'un doigt d'utilisateur à proximité, sans contact physique, l'unité de traitement étant agencée pour basculer d'un état de veille à un état actif en réponse à un signal provenant du capteur capacitif,
▪ une antenne d'identification par radiofréquence (21) pour communiquer avec une étiquette d'identification par radiofréquence d'un utilisateur, l'antenne d'identification par radiofréquence (21) présentant une forme circulaire entourant des composants destinés à gérer la lumière visible ; et le capteur capacitif (23) étant réalisé avec un matériau métallique et présentant une forme en étoile centrée au milieu de l'antenne circulaire d'identification par radiofréquence, les branches du capteur capacitif étant sensiblement perpendiculaires aux éléments conducteurs de l'antenne d'identification par radiofréquence, afin de limiter le couplage électromagnétique avec l'antenne d'identification par radiofréquence, le capteur capacitif (23) chevauchant des composants destinés à gérer la lumière visible.

2. Installation selon la revendication 1, dans laquelle la lumière visible émise par l'émetteur est modulée en amplitude, et l'installation comprend en outre un démodulateur cohérent (34) pour déterminer un signal d'enveloppe généré par le récepteur.

3. Installation selon la revendication 1 ou 2, comprenant en outre un capteur de température (22) pour compenser une dérive de température des émetteurs et des récepteurs.

4. Installation selon l'une des revendications précédentes, dans laquelle des inductances (26) sont insérées dans le câblage de circuits d'émission et de réception afin de réduire l'effet négatif de conducteurs de l'antenne d'identification par radiofréquence (21).

5. Installation selon l'une des revendications précédentes, comprenant en outre des moyens adhésifs pour presser l'installation à l'arrière d'un pare-brise (18) sans former de jour, l'installation étant réalisée à partir d'une carte flexible.
